# FASCICULE DE BREVET EUROPEEN

(11) **EP 2 752 302 B1**
(45) Date de publication et mention de la délivrance du brevet: **04.04.2018**
(21) Numéro de dépôt: 13192834.3
(22) Date de dépôt: 14.11.2013
(51) Int. Cl.: B41M 5/34, B41M 5/36, B42D 25/00, B42D 25/29, B42D 25/41, G06K 19/06

(54) **Agencement de pixels pour réalisation d'une image couleur**
Pixelanordnung für die Erstellung eines Farbbildes
Pixel arrangement for producing a colour image

(30) Priorité: 15.11.2012 FR 1260875
(43) Date de publication de la demande: 09.07.2014
(73) Titulaire: IDEMIA France, 92700 Colombes (FR)
(72) Inventeur: Bertin, Marc, 92726 Nanterre (FR); Morel, Yvonnic, 92726 Nanterre (FR); Vere, Denis, 92726 Nanterre (FR); Gautier, Mickael, 92726 Nanterre (FR)
(74) Mandataire: Perrot, Emilie

(56) Documents cités:
- EP-A1- 1 918 123
- WO-A1-2011/045180
- WO-A1-2011/107603

## Description

La présente invention concerne le domaine des dispositifs de sécurité. Il est connu d'employer un dispositif de sécurité afin d'authentifier l'origine ou l'émetteur d'un document sécurisé. Un tel document sécurisé est, par exemple, un document identitaire tel une carte d'identité ou un passeport. Sur ce document à sécuriser est apposé un dispositif de sécurité qui atteste de l'autorité de l'émetteur.

De manière classique le support d'un dispositif de sécurité est produit en grandes quantités en usine, dans une première phase. Ensuite, dans une seconde phase, dite de personnalisation, il est procédé à une adaptation du dispositif de sécurité à son usage final. Pour un document identitaire, la personnalisation peut consister à ajouter les données propres au titulaire du document identitaire tels que son nom ou encore sa photographie d'identité. L'étape de personnalisation est typiquement réalisée par un concessionnaire, telle une agence gouvernementale habilitée à émettre des documents identitaires.

Une méthode de personnalisation possible couramment employée est la gravure laser. Cette méthode permet par apport d'énergie au moyen d'un faisceau laser précisément collimaté, de modifier la structure interne d'une couche image. Ceci permet d'écrire/dessiner dans la dite couche image afin d'y placer un texte ou une image.

Un support, réalisé en usine, comprend au moins une telle couche image. Le dit support comprend encore typiquement une couche substrat disposé sous la couche image et peut encore comprendre une couche de protection transparente disposée au-dessus de la couche image. Ces différentes couches, typiquement en matériaux plastiques, sont typiquement assemblées par laminage.

Le principe de la gravure laser consiste à venir thermiquement modifier ponctuellement la couche image pour modifier sa couleur qui passe alors typiquement de blanc ou transparent à noir par carbonisation. Bien qu'une grande finesse de niveaux d'intensité laser soit possible et permette un grand nombre de niveaux de gris, ce principe ne permettait, jusqu'il y a peu, que de réaliser une image monochrome.

Récemment ce principe a été perfectionné afin de permettre de réaliser, en phase de personnalisation, une image en couleur. Pour cela, plusieurs approches sont possibles, telles que celles décrites dans les documents WO 2011045180 ou encore EP 1918123.

Toutes ces approches utilisent un agencement de pixels sensiblement identique. Dans un tel agencement de pixels, chaque pixel comprend une pluralité de N sous-pixels contigus, comprenant chacun une couleur différente choisie parmi une pluralité de même cardinal N de couleurs complémentaires. Un sous-pixel se caractérise en ce qu'il ne contient qu'une couleur. Ainsi, dans un pixel, chaque couleur complémentaire parmi les N est présente une fois et une seule dans un unique sous-pixel.

Ces N couleurs complémentaires sont typiquement choisies dans un jeu de couleurs complémentaires. Un jeu de couleurs complémentaires peut être RGB (R pour rouge, G pour vert (de l'anglais green) et B pour bleu). Ces couleurs complémentaires jouent le rôle d'une base vectorielle colorimétrique et en faisant varier l'intensité de chacune des couleurs complémentaires de chaque sous-pixel entre une valeur nulle et une valeur maximale, il est possible d'exprimer une couleur résultante pour le pixel quelconque. Un autre de jeu de couleurs complémentaires classique est CMY (C pour Cyan, M pour magenta et Y pour jaune (de l'anglais yellow)).

Le nombre N est au moins égal à 3, mais il peut être ajouté d'autres couleurs, la base n'étant alors plus minimale, ou encore du blanc et/ou du noir afin de pouvoir faire varier la luminosité du pixel. Il existe ainsi la quadrichromie ou encore l'hexachromie.

A partir d'un tel agencement de pixels, commun à toutes les approches, la façon d'exprimer une couleur résultante d'un pixel, distingue les approches.

En schématisant ces approches peuvent être qualifiées de directes ou par masque. Dans les approches directes, le moyen d'expression agit directement au niveau d'un sous-pixel en venant modifier la couleur qu'il contient. Ainsi le moyen d'expression peut venir exprimer une couleur d'un sous-pixel initialement invisible ou au contraire effacer une couleur d'un sous-pixel initialement visible. L'intensité du moyen d'expression appliquée à chaque sous-pixel et ainsi à chaque couleur complémentaire peut être modulée afin de faire varier l'intensité de chaque couleur complémentaire. Il est ainsi possible de réaliser toute combinaison linéaire d'intensité des couleurs complémentaires présentes dans les sous-pixels d'un pixel afin de réaliser une couleur résultante déterminée pour le pixel.

Dans les approches par masque, il est ajouté à la ou aux couches comprenant l'agencement de pixel et les couleurs, au moins une couche masque. Une telle couche masque peut être au moins de deux types en fonction de son comportement sous l'effet du moyen d'expression. Selon un premier type une couche masque est occultante. Une telle couche est initialement transparente et devient opaque (par exemple noire ou blanche) sous l'action du moyen d'expression. Il est alors possible en appliquant le moyen d'expression au droit d'un sous-pixel, selon une intensité déterminée, d'occulter la couleur du sous-pixel avec une intensité d'occultation contrôlée correspondante. En réalisant une telle occultation contrôlée au droit des N sous-pixels d'un pixel, il est possible d'exprimer toute combinaison de couleur résultante pour le pixel. Selon un deuxième type une couche masque est au contraire dévoilante. Une telle couche est initialement opaque (typiquement blanche) et devient transparente (ou absente) sous l'action du moyen d'expression. Il est alors possible en appliquant le moyen d'expression au droit d'un sous-pixel, selon une intensité déterminée, de dévoiler la couleur du sous-pixel avec une intensité de visibilité contrôlée correspondante. En réalisant un tel dévoilement contrôlé au droit des N sous-pixels d'un pixel, il est possible d'exprimer toute combinaison de couleur résultante pour le pixel.

Il est possible, d'utiliser soit une couche occultante, soit une couche dévoilante. Afin d'ajouter une dimension de luminosité du pixel, il est encore possible d'utiliser les deux types de couche simultanément.

En fonction de l'approche permettant d'exprimer les couleurs des pixels, la technologie de mise en oeuvre des pixels peut différer, cependant l'agencement, c'est-à-dire la disposition spatiale et colorimétrique des pixels/sous-pixels reste le même.

Afin de simplifier la programmation du moyen d'expression lors de la réalisation d'une image, selon l'art antérieur, ledit agencement est systématiquement régulier, en ce qu'il est spatialement et colorimétriquement périodique. De telles périodicités ne sont pas nécessairement avantageuses.

Un premier inconvénient de telles périodicités est que l'agencement de pixels est connu à priori. Ainsi un falsificateur qui dérobe un lot de dispositifs de sécurité entre l'usine et le concessionnaire, peut sans trop de difficulté, pour peu qu'il dispose du matériel adéquat, réaliser une personnalisation en réalisant l'image qu'il souhaite.

Un deuxième inconvénient de telles périodicités est qu'elles peuvent laisser apparaitre dans la zone image couverte par l'agencement de pixels des artefacts visuels préjudiciables, tels que des franges d'interférences de Moiré ou encore des effets de ligne.

Le document WO 2011/107603 décrit un procédé pour fusionner de multiples images de pixels géométriques et générer une seule image de pixels de modulation.

La présente invention remédie à ces différents inconvénients en proposant de brouiller spatialement et éventuellement colorimétriquement un agencement de pixels.

L'invention a pour objet un agencement de pixels destiné à être personnalisé pour réaliser une image, les pixels formant un pavage d'une surface image, chaque pixel comprenant une pluralité de N sous-pixels contigus comprenant chacun une couleur différente choisie parmi N couleurs complémentaires, l'agencement de pixels étant brouillé spatialement relativement à un agencement spatialement périodique.

Selon une autre caractéristique de l'invention, l'agencement de pixels est brouillé colorimétriquement relativement à un agencement colorimétriquement périodique.

Selon une autre caractéristique de l'invention, la réalisation de l'image comprend une gravure laser.

Selon une autre caractéristique de l'invention, un brouillage colorimétrique définit une affectation des N couleurs complémentaires aux N sous-pixels d'un pixel, indépendamment pour chaque pixel.

Selon une autre caractéristique de l'invention, un sous-pixel comprend une zone de couleur et un fond contrastant, et un brouillage spatial définit une forme de la zone de couleur, indépendamment pour chaque sous-pixel.

Selon une autre caractéristique de l'invention, un sous-pixel comprend une zone de couleur et un fond contrastant, et un brouillage spatial définit une position relative de la zone de couleur, indépendamment pour chaque sous-pixel.

Selon une autre caractéristique de l'invention, les sous-pixels sont disposés selon un arrangement rectangulaire.

Selon une autre caractéristique de l'invention, les sous-pixels sont disposés selon un arrangement hexagonal.

L'invention concerne encore un dispositif de sécurité comprenant un tel agencement.

L'invention concerne encore un document identitaire comprenant un tel agencement.

L'invention concerne encore un codage d'un agencement de pixels destiné à être personnalisé par gravure au laser pour réaliser une image couleur, l'agencement de pixels étant brouillé spatialement et le codage comprenant des éléments de définition numériques de l'agencement et de son brouillage comprenant des paramètres et/ou des éléments de définition graphiques, ces éléments de définition permettant de reproduire ledit agencement de pixels.

Selon une autre caractéristique de l'invention, les paramètres comprennent au moins un paramètre global, défini pour la totalité de l'agencement, comprenant au moins un paramètre de dimension définissant les dimensions de l'agencement, au moins un paramètre de résolution définissant les résolutions de l'agencement, au moins un paramètre de nombre de couleur définissant le nombre N de couleurs complémentaires, au moins un paramètre de définition de couleur définissant les N couleurs complémentaires.

Selon une autre caractéristique de l'invention, les paramètres comprennent encore un paramètre global d'arrangement définissant l'arrangement des sous-pixels défini parmi rectangulaire ou hexagonal.

Selon une autre caractéristique de l'invention, les paramètres comprennent encore un paramètre global de forme définissant la forme d'un pixel.

Selon une autre caractéristique de l'invention, le paramètre global de forme d'un pixel comprend un premier attribut de forme défini parmi ligne ou triangle.

Selon une autre caractéristique de l'invention, le paramètre global de forme d'un pixel comprend encore un deuxième attribut d'orientation défini parmi direction 1, direction 2 ou direction 3 et un troisième attribut de décalage défini parmi positif, nul ou négatif.

Selon une autre caractéristique de l'invention, les paramètres comprennent encore au moins un paramètre pixel, individuellement défini pour chaque pixel, comprenant un paramètre d'affectation définissant l'affectation des N couleurs complémentaires aux N sous-pixels du pixel.

Selon une autre caractéristique de l'invention, les paramètres comprennent encore au moins un paramètre sous-pixel, individuellement défini pour chaque sous-pixel, comprenant un paramètre de forme définissant la forme d'une zone de couleur du sous-pixel et un paramètre de position définissant la position d'une zone de couleur du sous-pixel.

Selon une autre caractéristique de l'invention, les éléments de définition graphiques comprennent une représentation graphique indicative de l'agencement.

L'invention concerne encore un procédé de personnalisation d'un tel agencement, pour réaliser une image, comprenant les étapes suivantes : réception d'une image à réaliser, réception d'un codage associé au dit agencement, adaptation d'une carte de réalisation d'image en fonction du brouillage de l'agencement tel que défini par le dit codage associé reçu, réalisation de l'image selon la carte de réalisation d'image adaptée.

D'autres caractéristiques, détails et avantages de l'invention ressortiront plus clairement de la description détaillée donnée ci-après à titre indicatif en relation avec des dessins sur lesquels :
- les figures 1-9 présentent différents agencements de pixels,
- la figure 10 illustre l'affectation des couleurs à un pixel,
- la figure 11 illustre schématiquement la forme de la zone de couleur d'un sous-pixel,
- la figure 12 illustre schématiquement la position de la zone de couleur d'un sous-pixel,
- les figures 13 et 14 illustrent schématiquement respectivement un agencement régulier et ce même agencement brouillé colorimétriquement,
- la figure 15 illustre un codage.

Dans la description qui suit, un même signe de référence désigne un même objet. Un tel signe est le plus souvent un nombre. Ledit nombre peut être accompagné d'une lettre afin de préciser une occurrence du dit objet. Ainsi par exemple le nombre 3 désigne de manière générique un pixel, tandis que 3a, 3b ou 3c désignent chacun un pixel particulier.

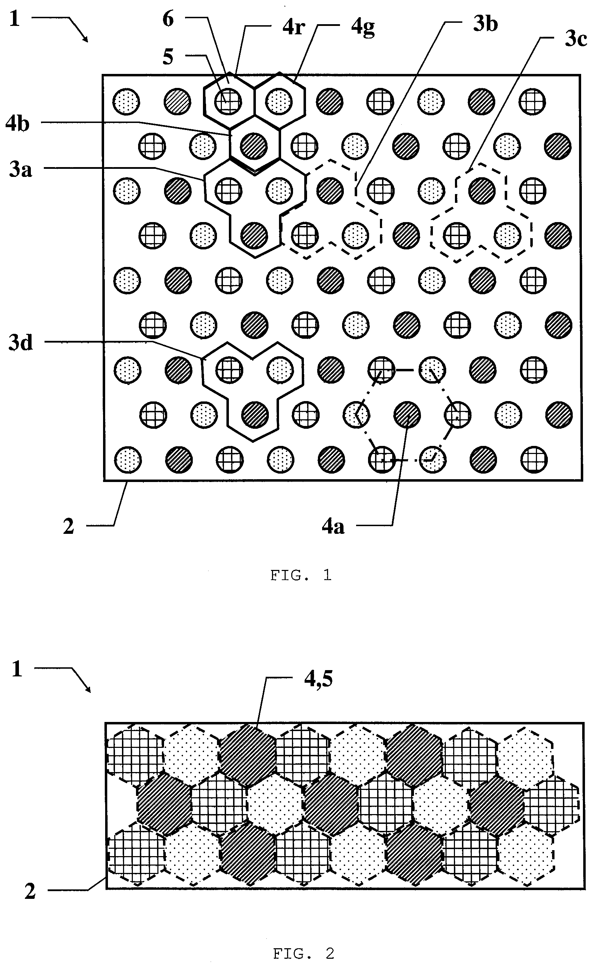

La figure 1 présente un mode de réalisation possible d'un agencement 1 de pixels 3. Cet agencement 1 recouvre une surface image 2 et est du type apte à être personnalisé par un moyen d'expression/réalisation d'image pour réaliser une image. Les pixels 3 sont tels qu'ils forment un pavage de la dite surface image 2.

Un pavage s'entend ici au sens topologique, en ce que toute la surface image 2 est couverte par les pixels 3, sans espace libre, et que la somme des pixels 3 est égale à la surface 2.

Chaque pixel 3 est tel qu'il comprend une pluralité de N sous-pixels 4. Comme il a été vu précédemment N est au moins égal à 3 et peut être supérieur. N est commun à la totalité de l'agencement 1. Afin de simplifier la description il est considéré dans la suite de manière illustrative que N est égal à 3. Ainsi les figures 1-9 présentent des sous-pixels 4 de 3 couleurs complémentaires distinctes, figurées par trois motifs graphiques : pointillé, hachuré et quadrillé.

Les sous-pixels 4 d'un pixel 3 sont contigus. Les sous-pixels 4 d'un pixel 3 pavent la surface du dit pixel 3. Ainsi, les sous-pixels 4 forment aussi un pavage de la surface image 2. Un sous-pixel 4 se caractérise en ce qu'il comprend une couleur unique choisie parmi N couleurs complémentaires d'un jeu de couleurs. Chaque sous-pixel 4 d'un pixel 3 comprend une des N couleurs complémentaires différente des couleurs complémentaires des autres sous-pixels 4 d'un même pixel 3. Ainsi le nombre N de couleurs complémentaires étant égal au nombre N de sous-pixels 4 par pixel 3, chaque couleur complémentaire est présente une et une seule fois par pixel 3 dans un unique sous-pixel 4.

Une image couleur, y compris monochrome, peut être réalisée à partir d'un tel agencement 1 en exprimant et/ou en masquant sélectivement et de manière proportionnelle chaque sous-pixel 4 en fonction d'une couleur résultante souhaitée pour chaque pixel 3. Pour cela un moyen d'expression pour réaliser une image est utilisé. Pour réaliser une image couleur donnée il convient de connaitre avec précision l'agencement 1 des sous-pixels 4 afin de connaitre les positions des couleurs complémentaires que l'on souhaite exprimer et/ou masquer et ainsi pouvoir réaliser une carte de réalisation d'image adaptée à la dite image couleur à réaliser.

Afin de simplifier la programmation de ladite carte de réalisation d'image, toutes les méthodes de l'art antérieur simplifient l'agencement 1 de pixels 3 en réalisant un agencement 1 régulier, périodique spatialement et colorimétriquement. Des agencements 1 différents mais tous réguliers/périodiques sont illustrés aux figures 1-9.

Au contraire, selon une caractéristique de l'invention, il n'est pas cherché à simplifier la réalisation d'une image couleur, mais au contraire à la rendre plus complexe pour une personne non autorisée afin de sécuriser davantage un dispositif de sécurité comprenant un tel agencement 1.

Pour cela, relativement à un agencement spatialement et colorimétriquement périodique, un agencement 1 selon l'invention est brouillé spatialement et éventuellement colorimétriquement. Ce brouillage peut être quelconque et affecter tout ou partie des sous-pixels 4, soit spatialement, soir colorimétriquement. Cependant, lors de sa détermination le dit brouillage est mémorisé, afin de pouvoir être reproduit et exploité lors d'une phase de personnalisation réalisée par un opérateur autorisé.

Ce brouillage agit ainsi comme un cryptage de l'agencement 1 de pixels 3. La détermination mémorisée du brouillage est définie par ce que l'on nomme dans la suite un codage 30 d'agencement, qui joue ici le rôle d'une clef de déchiffrage du dit cryptage. Ainsi un opérateur autorisé, en possession du codage 30 d'agencement est en mesure d'utiliser efficacement ledit agencement 1 et est capable de réaliser une image couleur correcte à partir du dit agencement 1. Au contraire, un falsificateur non autorisé, ne possédant pas le codage 30 d'agencement ne peut réaliser une image que sur la base d'un agencement 1 supposé et donc le plus souvent faux. Sur cette supposition, la réalisation d'une image va produire une image de couleurs, et le cas échéant de formes, modifiées/faussées, visiblement erronée. Ceci rend toute falsification aisément détectable visuellement.

L'étape de personnalisation met en oeuvre une opération de réalisation d'image. Cette opération de réalisation d'image consiste à exprimer une image à partir de l'agencement et utilise un moyen d'expression ou de réalisation d'image. Ce moyen d'expression peut, mais pas nécessairement, comprendre un laser apte à réaliser une gravure.

Un premier moyen de brouiller un agencement 1 consiste à réaliser un brouillage colorimétrique. Ceci est typiquement réalisé en définissant, pour chaque pixel 3 individuellement, une affectation des N couleurs complémentaires aux N sous-pixels 4 du dit pixel 3.

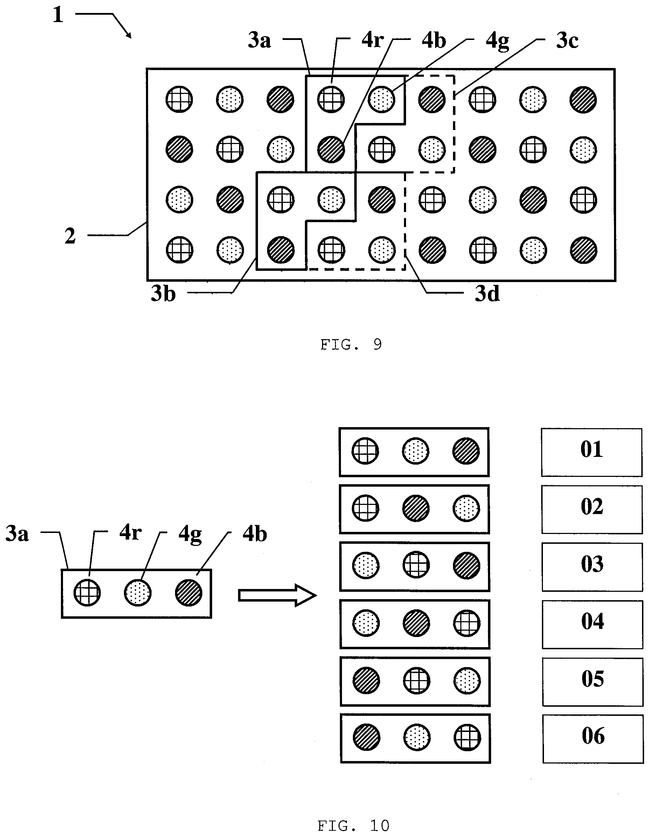

Pour N couleurs complémentaires, il est possible de définir N! affectations possibles différentes de ces couleurs, soit pour N=3, 6 affectations, telles qu'illustrées à la figure 10. Chaque affectation correspond à une permutation circulaire des N couleurs complémentaires. Ainsi la première affectation est la permutation identité. Chaque telle permutation peut être codée par un code, tel un chiffre de 01 à 06, comme indiqué à droite en regard de chaque affectation.

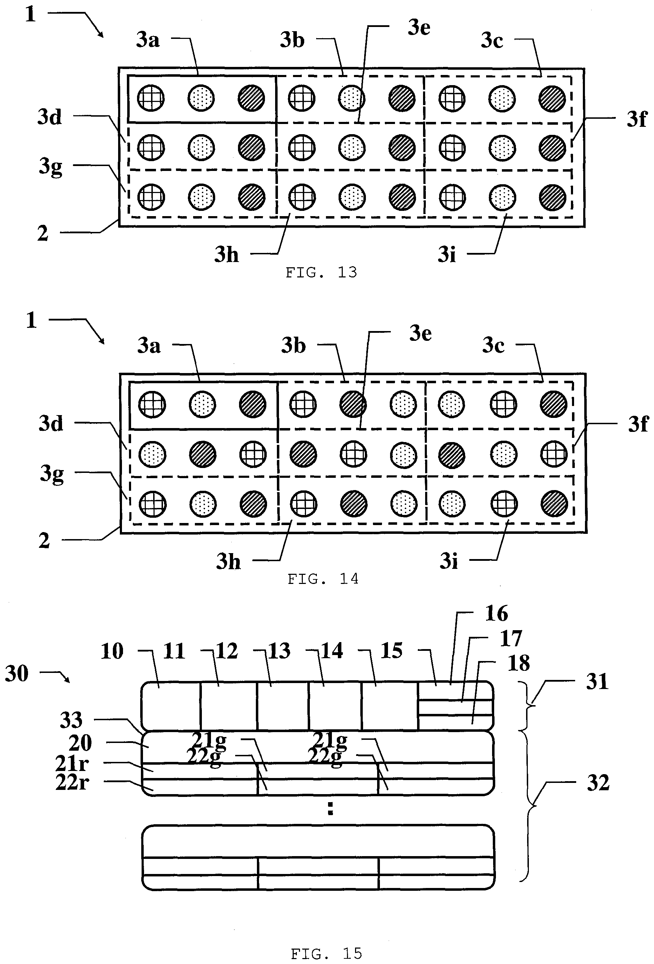

Les figures 13 et 14 illustrent un brouillage colorimétrique appliqué à un fragment de surface image 2, ici réduite à 9 pixels 3a-3i, afin de simplifier le propos. La figure 13 illustre un agencement 1, selon l'art antérieur, colorimétriquement périodique. Chaque pixel 3a-3i présente la même affectation de couleur, par exemple l'affectation codée 01. Au contraire l'agencement 1 de la figure 14 selon l'invention présente une affectation quelconque pour chaque pixel 3. Ainsi le pixel 3a présente une affectation codée 01, le pixel 3b présente une affectation codée 02, le pixel 3c présente une affectation codée 03, le pixel 3d présente une affectation codée 04, le pixel 3e présente une affectation codée 05, le pixel 3f présente une affectation codée 06, le pixel 3g présente une affectation codée 01, le pixel 3h présente une affectation codée 02 et le pixel 3i présente une affectation codée 03.

Ainsi un falsificateur, utilisant l'agencement 1 de la figure 14 et qui veut exprimer la couleur « quadrillée » du pixel 3e, en se basant sur un agencement 1 selon la figure 13, va au contraire exprimer la couleur « hachurée ». Si ce falsificateur ne connait pas les affectations des couleurs, il a toutes les chances de ne pas arriver à reproduire les couleurs de l'image qu'il souhaite réaliser.

La distribution des affectations peut être quelconque, réalisée selon une séquence ou obtenue au moyen d'une fonction aléatoire. Ce qui importe est que cette distribution, une fois déterminée et réalisée dans un agencement 1, soit mémorisée dans un codage 30 associé au dit agencement 1.

Un autre moyen de brouiller un agencement 1 consiste à réaliser un brouillage spatial. Un tel brouillage spatial, dont il va être décrit au moins deux modes de réalisation, peut être employé alternativement ou complémentairement avec un brouillage colorimétrique.

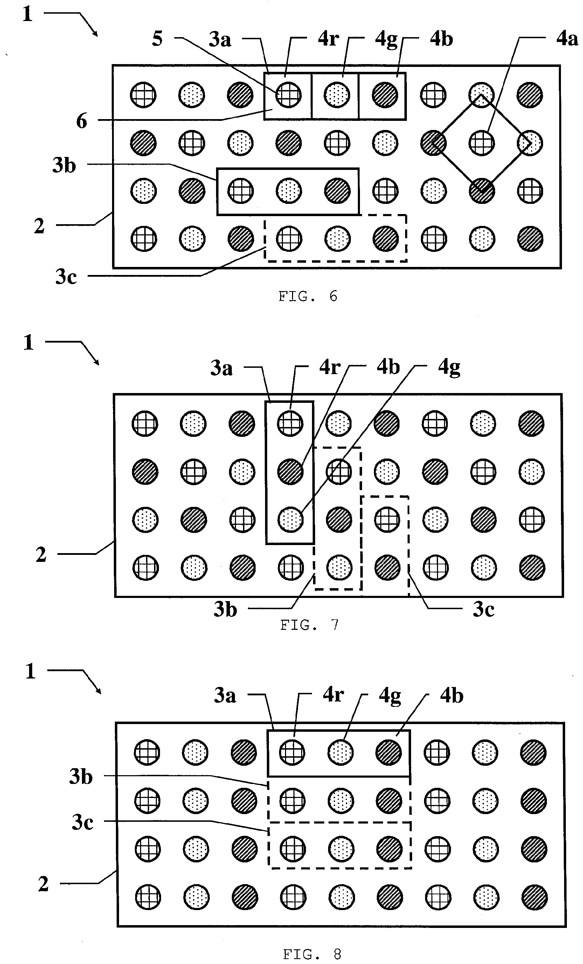

Un sous-pixel 4, tel que défini précédemment pave la surface image 2. Sa forme dépend de l'arrangement des sous-pixels 4. Comme il est décrit plus loin, dans un arrangement rectangulaire, tel qu'illustré aux figures 6-9, les sous-pixels 4 sont rectangulaires/carrés, tandis que dans un arrangement hexagonal, tel qu'illustré aux figures 1-5, les sous-pixels 4 sont hexagonaux.

Selon un mode de réalisation, illustré à la figure 2, une couleur occupe la totalité de la surface d'un sous-pixel. Dans ce cas un sous-pixel 4 se confond avec une zone de couleur 5.

Afin de simplifier les figures, et d'augmenter la lisibilité des figures, principalement 1 et 3-9, la couleur d'un sous-pixel 4 est indiquée pour ces figures 1 et 3-9 par un rond de ladite couleur disposé à l'intérieur du sous-pixel 4. Ceci est schématique et toute forme de zone de couleur 5 peut être utilisée avec tout arrangement 1.

Ainsi, il peut être avantageux qu'une couleur soit disposée sur un fond d'une autre couleur, par exemple du blanc, afin de contraster. Un sous-pixel 4 comprend ainsi une zone de couleur 5 et un fond contrastant 6. La zone de couleur 5 est de préférence incluse strictement dans la forme du pixel 4. Il est encore possible d'envisager des zones de couleur 5 débordant de la forme du pixel 4 et venant se superposer avec un pixel 4 voisin. Le fond contrastant 6 occupe la forme du pixel 4 non occupée par une zone de couleur 5. Ceci est illustré pour le sous-pixel 4r aux figures 1 et 6.

Selon l'art antérieur, la forme 7 de la zone de couleur est typiquement ronde ou carré, mais surtout, elle est toujours la même pour tous les sous-pixels 4. Selon un premier mode de réalisation d'un brouillage spatial, la forme 7 de la zone de couleur 5 est modifiée et est définie indépendamment pour chaque sous-pixel 4.

Cette forme 7 de zone de couleur 5 peut être quelconque. Cependant dans l'objectif d'une réalisation par un moyen d'expression d'image, elle est avantageusement décomposable en sous-sous-pixels 9, sensiblement ponctuels, un sous-sous-pixel 9 étant l'unité élémentaire réalisable/exprimable par un moyen d'expression. En fonction de la taille d'un sous-pixel 4 relativement à la taille moyenne d'un point d'un moyen d'expression, la forme 7 de la zone de couleur 5 d'un sous-pixel 4 est avantageusement discrétisé en un nombre limité de points/sous-sous-pixels 9.

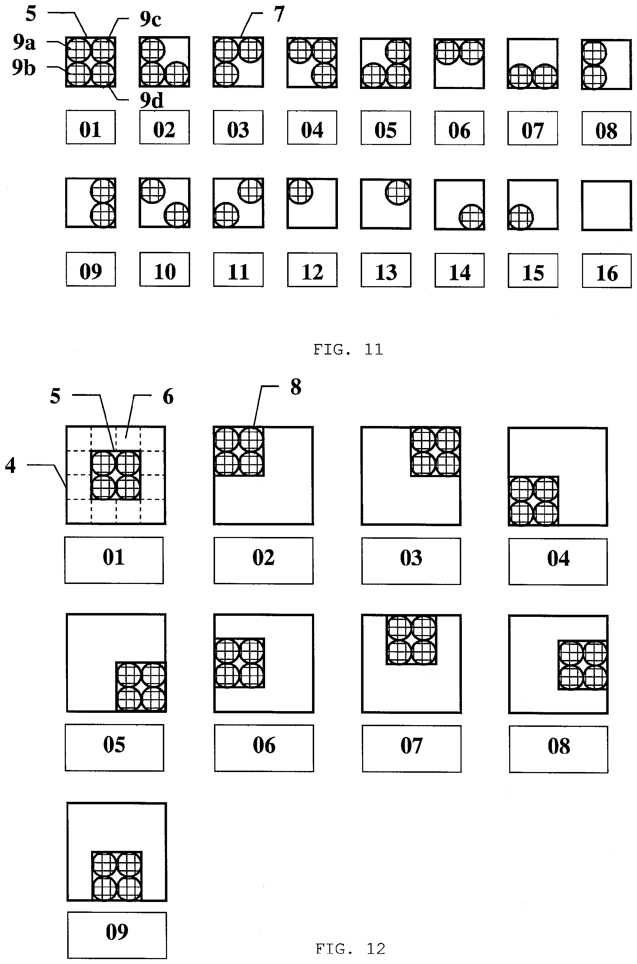

La figure 11, illustre un exemple pour un sous pixel 4 dont la zone de couleur 5 est discrétisée en quatre sous-sous-pixel 9a-9d. La figure 11 illustre dans ce cas les 16 formes 7 possibles pour une telle zone de couleur 5. Chaque forme 7 peut être codée, par exemple de 01 à 16, comme indiqué par un code en regard.

Il est ainsi possible de définir pour chaque sous-pixel 4 une forme 7 de la zone de couleur 5. Une variation, d'un sous-pixel 4 à l'autre, de la forme employée, permet de rompre la périodicité spatiale de l'agencement 1.

L'expression d'une couleur nécessite de connaître la position des sous-sous-pixels 9 et donc la forme 7 d'un sous-pixel 4. Sa non connaissance par un falsificateur rend plus difficile la réalisation d'une image correcte.

Au contraire, lors de la réalisation d'un brouillage modifiant les formes 7 des zones de couleur 5 des sous-pixels 4, le brouillage est mémorisé sous forme d'un codage 30 d'agencement, qui permet à un opérateur autorisé d'accéder à cette connaissance, lui permettant de réaliser correctement une image.

Selon l'art antérieur, la forme 7 de la zone de couleur 5 est toujours disposée à la même position relativement à la surface du sous-pixel 4, typiquement en son centre. Selon un deuxième mode de réalisation d'un brouillage spatial, la position 8 de la zone de couleur 5 peut être modifiée et définie indépendamment pour chaque sous-pixel 4.

Cette position 8 de zone de couleur 5 peut être quelconque. Elle peut ainsi être définie, pour chaque sous-pixel 4, par un décalage, entre un point de référence de la zone de couleur 5, tel que par exemple son centre, et un point de référence choisi dans le sous-pixel 4, tel que par exemple son centre. Un tel décalage peut ainsi, par exemple, être défini/codé par un décalage repéré par exemple par deux nombres Δx et Δy. Cependant afin de simplifier le codage de la position 8 de la zone de couleur 5, il est avantageux de discrétiser les différentes positions 8 possibles.

A la figure 12, un exemple illustratif est donné pour un sous pixel 4 dont la zone de couleur 5 présente 9 positions 8 discrètes. Chaque position 8 peut être codée, par exemple de 01 à 09, comme indiqué par les codes en regard. Ainsi la position codée 01 est une position centrée où la zone de couleur 5 est au centre du sous-pixel 4, la position codée 02 est diagonale haut gauche, la position codée 03 est diagonale haut droite, la position codée 04 est diagonale bas gauche, la position codée 05 est diagonale bas droite, la position codée 06 est médiane gauche, la position codée 07 est médiane haute, la position codée 08 est médiane droite, la position codée 09 est médiane basse.

Cette table de codage est illustrative et peut être modifiée. Ainsi afin de simplifier le codage il peut n'être conservé, en plus de la position centrée, que les positions diagonales (positions codées 02-05) ou encore que les positions médianes (positions codées 06-09). Cette table est plus particulièrement applicable à un sous-pixel 4 rectangulaire. Dans le cas d'un sous-pixel 4 hexagonal, les positions codées 02-09 peuvent être remplacées par six positions correspondant aux six coins de l'hexagone. Il est encore possible d'augmenter le niveau de discrétisation en ajoutant des positions intermédiaires, et des codes en conséquence.

Il est ainsi possible de définir pour chaque sous-pixel 4 une position 8 de la zone de couleur 5. Une variation d'un sous-pixel 4 à l'autre de la position 8 employée, permet de rompre la périodicité spatiale de l'agencement 1.

L'expression d'une couleur nécessite de connaître la position des sous-sous-pixels 9 et donc la position 8 d'un sous-pixel 4. Sa non connaissance par un falsificateur rend plus difficile la réalisation d'une image correcte.

Au contraire, lors de la réalisation d'un brouillage modifiant les positions 8 des zones de couleur 5 des sous-pixels 4, le brouillage est mémorisé sous forme d'un codage 30 d'agencement, qui permet à un opérateur autorisé d'accéder à cette connaissance, lui permettant de réaliser correctement une image.

Comme entrevu précédemment, les sous-pixels 4 pavent la surface image 2. Un sous pixel 4 étant sensiblement ponctuel, deux pavages réguliers d'une surface sont possibles.

Un premier pavage, illustré aux figures 1-5, est le pavage le plus économique, en ce qu'il permet la plus grande densité de sous-pixels 4. Ce pavage présente trois directions privilégiées, avantageusement orientées deux à deux selon des angles égaux à 60°. Sur les figures 1-5, une première direction est horizontale et les deux autres directions sont obliques, respectivement vers la gauche et vers la droite.

Comme illustré à la figure 1, Un sous-pixel 4a possède six voisins équidistants, disposés sensiblement aux sommets d'un hexagone. Il en résulte que la surface élémentaire d'un sous-pixel 4r, 4g, 4b est hexagonale. Aussi un tel pavage ou arrangement est-il qualifié d'hexagonal.

Un deuxième pavage, illustré aux figures 6-9, est un peu moins économique. Il présente d'autres avantages, notamment en ce qu'il facilite un repérage cartésien. Ce pavage présente deux directions privilégiées, avantageusement perpendiculaires. Sur les figures 6-9, une première direction est horizontale et une deuxième direction est verticale.

Comme illustré à la figure 6, un sous-pixel 4a possède quatre voisins équidistants, disposés sensiblement aux sommets d'un rectangle/carré (et quatre autre voisins diagonaux équidistants, mais plus éloignés). Il en résulte que la surface élémentaire d'un sous-pixel 4r, 4g, 4b est rectangulaire. Aussi un tel pavage ou arrangement est-il qualifié de rectangulaire.

Le type d'arrangement des sous-pixels 4, parmi hexagonal ou rectangulaire est une caractéristique intrinsèque de l'agencement 1. A ce titre elle est avantageusement présente dans le codage 30 d'agencement.

Le brouillage de l'agencement 1 de pixels, relativement à un agencement régulier et périodique peut être réalisé de manière quelconque, au moyen de l'un, de deux ou des trois moyens (un colorimétrique et deux spatiaux) précédemment décris. Il peut être réalisé manuellement en modifiant les différents paramètres, au moyen d'une ou plusieurs fonctions, le cas échéant aléatoire, appliquée aux différents paramètres d'affectation, de forme de zone de couleur et/ou de position de zone de couleur. Ce qui est important est que le brouillage puisse être reproduit par un opérateur autorisé afin de pouvoir, en phase de personnalisation, réaliser efficacement l'opération de réalisation/expression d'une image couleur.

Afin de réaliser cette reproduction, un agencement 1 de pixels 3 est avantageusement défini par un codage 30 d'agencement comprenant tous les éléments de définition permettant de reproduire ledit agencement 1. Un tel codage 30 comprend tous les éléments de définition et est transmis par le fabricant de l'agencement 1 à un opérateur autorisé pour lui permettre de réaliser une image.

Les éléments de définition d'un agencement 1 compris dans un codage 30 peuvent être des éléments de définition numériques et comprennent typiquement des paramètres définissant de manière chiffrée des caractéristiques de l'agencement 1 ainsi codé. Alternativement ou de manière complémentaire, les éléments de définition d'un agencement 1 compris dans un codage 30 peuvent encore être des éléments de définition graphiques et comprennent typiquement une représentation graphique indicative de l'agencement 1 et définissent de manière analogique des caractéristiques de l'agencement 1 ainsi codé. Il est ainsi possible de définir certaines caractéristiques de l'agencement 1 par des éléments de définition graphiques et d'autres caractéristiques de l'agencement 1 par des éléments de définition numériques.

Un tel codage 30 comprend des éléments explicites tels que les affectations de couleur de chaque pixel 3 qui doivent effectivement être transmis. Un tel codage 30 comprend encore des éléments implicites tels que les tables de codage ou le format du codage lui-même qui peuvent être effectivement transmis ou qui peuvent être convenus au préalable entre le fabricant et l'opérateur autorisé.

Si la fonction de brouillage est déterministe, le codage 30 peut comprendre cette fonction afin de l'appliquer à nouveau en phase de personnalisation.

Alternativement, et notamment si la fonction de brouillage n'est pas déterministe, un codage 30 comprend une définition de l'agencement 1 soit absolue, soit relative à un agencement régulier de référence.

Afin de définir un agencement 1 au moyen d'éléments de définition numériques, un codage 30 comprend des paramètres globaux, correspondant à des caractéristiques générales de l'agencement 1 ou applicables à tous les pixels 3 et/ou sous-pixels 4, des paramètres pixel, correspondant à des caractéristiques propres à un pixel 3 et donc définis individuellement pour chaque pixel 3, et le cas échéant des paramètres sous-pixels, correspondant à des caractéristiques propres à un sous-pixel 4 et donc définis individuellement pour chaque sous-pixel 4.

Dans les paramètres globaux, il peut être inclus un paramètre de dimension 10 définissant les dimensions de l'agencement 1. Un tel paramètre comprend par exemple une longueur et une largeur de la surface image 2, ou encore un nombre de sous-pixels en longueur et un nombre de sous-pixels en largeur.

Dans les paramètres globaux, il peut encore être inclus un paramètre de résolution 11 définissant les résolutions de l'agencement 1, respectivement selon deux directions, par exemple en longueur et en largeur ou selon deux directions obliques, par exemple sous forme d'une distance entre deux sous-pixels 4 contigus ou encore sous forme d'un nombre de sous-pixels par unité de longueur.

Dans les paramètres globaux, il peut encore être inclus un paramètre de nombre de couleurs 12 définissant le nombre N de couleurs complémentaires, et donc le nombre de sous-pixels 4 par pixel 3.

Dans les paramètres globaux, il peut encore être inclus un paramètre de définition de couleur 13 définissant les N couleurs complémentaires. Ceci peut comprendre une définition de chacune des couleurs individuellement ou encore un renvoi à une définition d'un jeu de couleur, tel que RGB ou encore CMY.

Il a été vu précédemment que l'arrangement des sous-pixels 4, parmi hexagonal ou rectangulaire, était une caractéristique d'un agencement 1. Aussi, dans les paramètres globaux, il peut encore être inclus un paramètre d'arrangement 14 définissant l'arrangement des sous-pixels 4, parmi hexagonal ou rectangulaire.

La forme d'un pixel 3 est une caractéristique globale d'un agencement 1. Une fois choisie une forme de pixel, il convient, afin de paver la surface image de conserver cette même forme.

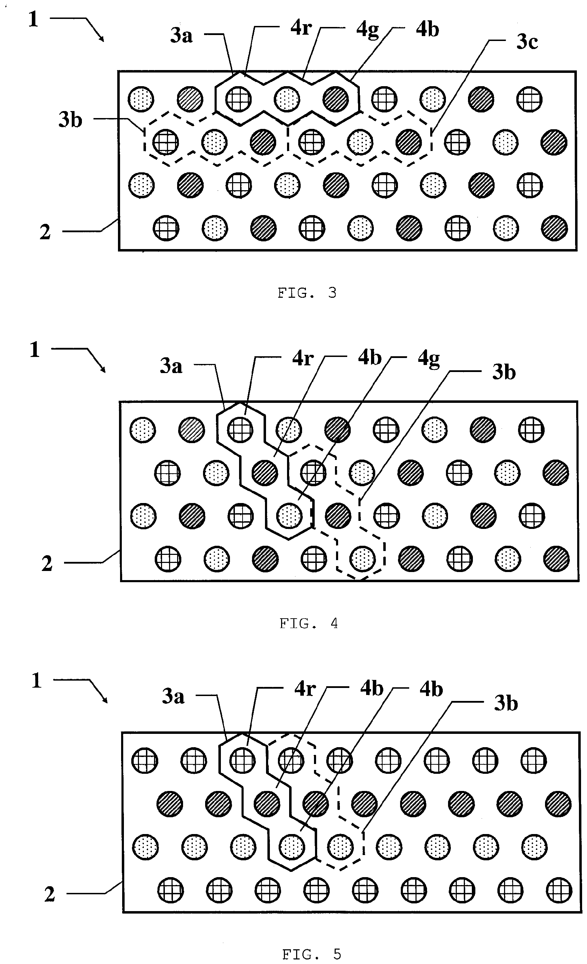

La forme 15 d'un pixel 3 n'est pas une caractéristique intrinsèque d'un agencement 1. Dans un agencement régulier selon l'art antérieur, le découpage en pixel importe peu. Ainsi pour un même agencement 1 tel qu'illustré aux figures 1-4, il est possible de choisir indifféremment une forme 15 de pixel triangulaire (figure 1), linéaire horizontale (figure 3), linéaire oblique vers la gauche (figure 4). Il pourrait encore être choisi une forme de pixel linéaire oblique vers la droite (non représentée).

Cependant, à partir du moment où l'agencement 1 est brouillé selon l'une des modalités de l'invention, la forme 15 de pixel devient une clef importante de définition et de relecture d'un codage 30 d'agencement.

Dans les paramètres globaux, il peut encore être inclus un paramètre de forme 15 d'un pixel 3.

En référence aux figures 1-9 vont être décrits les différentes formes 15 de pixel 3. Le paramètre de forme 15 comprend tout ce qui permet de situer les contours des pixels 3 afin de savoir à quel pixel 3 appartient un sous-pixel 4 donné. Une telle définition nécessite plusieurs attributs. Selon un mode de réalisation possible, il est possible de déterminer complètement la forme 15 de pixel au moyen d'un attribut de forme 16, d'un attribut d'orientation 17 et d'un attribut de décalage 18.

L'attribut de forme 16 définit la forme intrinsèque d'un pixel et est défini parmi ligne ou triangle. La figure 1 illustre, au moyen des pixels 3a-3d, une forme 16 de pixel triangulaire. Il peut être remarqué dans ce cas d'un arrangement hexagonal que les pixels sont nécessairement alternés un sur deux. Les figures 2-5 illustrent une forme 16 de pixel linéaire, pour un arrangement hexagonal. Les figures 6-8 illustrent une forme 16 de pixel linéaire, pour un arrangement rectangulaire. La figure 9 illustre une forme 16 de pixel non linéaire, que l'on peut qualifier de triangulaire.

Il est ainsi possible d'utiliser un même code pour l'attribut de forme 16 pour un arrangement hexagonal ou rectangulaire.

L'attribut d'orientation 17 définit l'orientation d'un pixel. L'orientation d'un pixel linéaire peut prendre trois valeurs différentes : direction 1, direction 2 ou direction 3. Dans un arrangement hexagonal, il peut être horizontal (figure 3), oblique vers la gauche (figure 4) ou encore oblique vers la droite (non représenté). Dans un arrangement rectangulaire, il peut être horizontal (figures 6 et 8), vertical (figure 7) ou encore oblique/diagonal (non représenté). Il peut ainsi être convenu que direction 1 représente une orientation horizontale, direction 2 une orientation verticale ou oblique vers la gauche et direction 3 une orientation diagonale ou oblique vers la droite.

L'orientation d'un pixel triangulaire, n'a que peu de sens. Cependant la disposition relative des pixels n'est déterminée que lorsqu'au moins deux pixels sont positionnés relativement. Ainsi, à la figure 1, le positionnement d'un second pixel 3b relativement à un premier pixel 3a oriente l'ensemble selon une direction horizontale. Une autre position du second pixel aurait pu définir une des deux directions obliques possibles. L'attribut d'orientation 17 pour un pixel triangulaire peut ainsi définir la disposition relative.

L'exemple donné pour un arrangement hexagonal en référence à la figure 1 peut se décliner pour un arrangement rectangulaire. Ainsi sur la figure 9 la position du pixel 3c « à côté » relativement au pixel 3a définit une orientation horizontale. Une autre position, « sous » le pixel 3a (non représentée) aurait alternativement définit une orientation verticale. A noter que seule deux orientations sont possibles pour un arrangement rectangulaire de pixels triangulaires.

Afin de compléter la définition de forme 15 d'un pixel, il convient d'ajouter aux deux attributs précédents un attribut de décalage 18. Pour une même forme 16 et une même orientation 17 plusieurs configurations sont encore possibles. Ainsi les figures 4 et 5 présentent toutes deux des pixels 3 de forme 16 linéaire et d'orientation 17 oblique vers la gauche. Un attribut de décalage 18 permet de les distinguer. Ainsi la figure 5 peut être caractérisée par un décalage nul tandis que la figure 4 peut être caractérisée par un décalage positif. Le décalage peut ainsi être codé par N valeurs, soit dans le cas de N=3 couleurs/sous-pixels : négatif, nul, positif (-1, 0, 1).

De manière analogue, pour un arrangement rectangulaire, les figures 6 et 8 présentent toutes deux des pixels 3 de forme 16 linéaire et d'orientation 17 horizontale. Ainsi la figure 8 peut être caractérisée par un décalage nul tandis que la figure 6 peut être caractérisée par un décalage positif.

Dans le cas d'un pixel 3 de forme 16 triangulaire, le décalage peut être utilisé pour caractériser le décalage entre deux « séries » de pixels 3. Ainsi la figure 9 présente une première série de pixels 3a, 3c. Une deuxième série de pixels 3b, 3d présente, relativement à la première série, un décalage négatif.

Au moyen de ces trois attributs illustratifs : de forme 16, d'orientation 17 et de décalage 18, il est possible de définir complétement les pixels 3 pour une surface image 2 et ceci quel que soit l'arrangement hexagonal ou rectangulaire.

Les quelques éléments pouvant manquer, tel que la position d'un pixel origine de référence, peuvent soit faire l'objet d'un paramètre global supplémentaire ou soit alternativement faire l'objet d'une convention préalable. Ainsi il peut être convenu entre le fabricant et l'opérateur autorisé que le premier pixel 3 débute avec le sous-pixel 4 situé dans le coin en haut à gauche de la surface image 2.

Tous les paramètres globaux d'un codage 30 peuvent être codés alpha-numériquement selon une convention prédéfinie et ainsi être stockés dans un moyen d'enregistrement, tel un fichier.

En plus des paramètres globaux, il convient selon l'invention, de définir et d'inclure dans le codage 30 d'agencement au moins un paramètre pixel.

Dans la mesure où un brouillage colorimétrique est appliqué, au moins un paramètre pixel d'affectation 20 est nécessaire. Un tel paramètre d'affectation 20 définit, pour chaque pixel 3, l'affectation des N couleurs complémentaires aux N sous-pixels 4 du pixel 3. Ceci peut, par exemple, être codé au moyen d'une table comprenant des codes, tels que ceux de la figure 10. Un tel paramètre caractéristique du pixel 3 est ainsi défini pour chaque pixel 3 de la surface image 2.

Afin de réaliser le codage 30 d'agencement, il faut associer à chaque pixel 3 son paramètre d'affectation 20. Ceci peut, par exemple être réalisé au moyen d'une matrice bidimensionnelle indexée sur les pixels 3, chaque élément contenant la valeur du paramètre d'affectation 20. Alternativement, il peut aussi être convenu d'une séquence de lecture des pixels 3. Cette séquence peut, par exemple être de gauche à droite et de haut en bas. Chacun des paramètres d'affectation 20 est alors rangé en série selon ladite séquence de lecture. L'homme du métier connait d'autres moyens de stocker une telle information.

Dans la mesure où un brouillage spatial de forme, respectivement spatial de position, est appliqué, au moins un paramètre sous-pixel de forme 21, respectivement au moins un paramètre sous-pixel de position 22, est nécessaire.

Un tel paramètre de forme 21 définit la forme d'une zone de couleur 5 du sous-pixel 4. Un tel paramètre de position 22 définit la position d'une zone de couleur 5 du sous-pixel 4.

Ceci peut, par exemple, être codé au moyen d'une table comprenant des codes tels que ceux de la figure 11 pour le paramètre de forme 21, respectivement tels que ceux de la figure 12 pour le paramètre de position 22.

Un tel paramètre de forme 21, respectivement de position 22 est caractéristique d'un sous-pixel 4 est ainsi défini pour chaque sous-pixel 4 de la surface image 2.

Afin de réaliser le codage 30 d'agencement, il faut associer à chaque sous-pixel 4 son paramètre de forme 21, respectivement son paramètre de position 22. Comme pour le paramètre d'affectation et le pixel, ceci peut, par exemple être réalisé au moyen d'une matrice bidimensionnelle indexée sur les sous-pixels 4, chaque élément contenant la valeur du paramètre de forme 21, respectivement du paramètre de position 22. Alternativement, il peut aussi être convenu d'une séquence de lecture des sous-pixels 4. Cette séquence peut, par exemple être de gauche à droite et de haut en bas. Chacun des paramètres de forme 21, respectivement de position 22 est alors rangé en série selon ladite séquence de lecture. L'homme du métier connait d'autres moyens de stocker une telle information.

Selon un mode de réalisation visant à réduire la taille mémoire nécessaire au stockage des paramètres pour un codage 30 d'agencement, il peut encore être décidé qu'une forme 21 de zone de couleur 5, respectivement une position 22 de zone de couleur 5, soit commune à tous les sous-pixels 4 d'un même pixel 3. Ceci réduit un peu les possibilités de brouillage, mais transforme avantageusement le paramètre sous-pixel de forme 21, respectivement le paramètre sous-pixel de position 22, en un paramètre pixel. Ceci permet avantageusement de diviser par N la taille mémoire nécessaire au stockage de ce paramètre dans un codage 30 d'agencement.

La figure 15 illustre la structure mémoire des éléments de définition numériques d'un codage 30 d'agencement 1 selon un mode de réalisation possible. Le codage 30 comprend un entête 31 regroupant les paramètres globaux : un paramètre de dimension 10, un paramètre de résolution 11, un paramètre de nombre de couleur 12, un paramètre de définition des couleurs 13, un paramètre d'arrangement 14, un paramètre de forme 15 comprenant un attribut de forme 16, un attribut d'orientation 17 et un attribut de décalage 18.

Le codage 30 comprend encore un corps 32 comprenant un enregistrement 33 par pixel 3. Chaque enregistrement pixel 33 comprend un paramètre d'affectation 20 et un enregistrement pour chaque sous-pixel 4. Ainsi un premier, respectivement deuxième, respectivement troisième, enregistrement sous-pixel comprend un paramètre forme 21r, respectivement 21g, respectivement 21b, de zone de couleur 5 et un paramètre position 22r, respectivement 22g, respectivement 22b, de zone de couleur 5 pour un sous-pixel 4r, respectivement 4g, respectivement 4b.

S'il est choisi, alternativement ou complémentairement aux éléments de définition numériques précédemment décrits, d'employer des éléments de définition graphiques pour un codage 30 d'un agencement 1, il apparait que certaines caractéristiques sont plus particulièrement adaptées à un tel mode de définition. Un élément de définition graphique comprend une représentation graphique indicative de l'agencement 1.

Selon un mode de réalisation une telle représentation graphique peut être directement une image fidèle de l'agencement 1, avantageusement en couleur, et d'une définition suffisante pour permettre de montrer les caractéristiques. Une telle image « photographie » l'agencement 1 et ainsi toutes les caractéristiques visibles de ce dernier, y compris les résultats du ou des brouillages. Une telle image permet de contenir et donc de transmettre à un opérateur autorisé toutes les caractéristiques visibles.

Parmi les caractéristiques précédemment décrites, toutes sont visibles dans une telle représentation graphique fidèle. Certaines sont plus aisément extractibles d'une représentation graphique. Ces caractéristiques sont passées en revue et discutées ci-dessous.

Les dimensions et résolution de l'image sont transmises analogiquement, pour peu que la représentation graphique soit à l'échelle. Ces caractéristiques sont plus adaptées à être transmises sous forme numérique. Cependant il peut être noté que la plupart des formats d'image numérique contiennent ces caractéristiques sous forme numériques dans un entête de fichier image.

Le nombre N et la définition des couleurs apparaissent immédiatement à l'analyse d'une petite zone de l'image d'étendue suffisante pour comprendre au moins un pixel complet et ses N sous-pixels.

L'arrangement parmi rectangulaire ou hexagonal apparait aussi immédiatement à l'analyse de l'image.

La forme d'un pixel et les attributs associés de forme, orientation et décalage, employés pour une définition numérique n'ont pas lieu d'être dans une définition graphique, où les sous-pixels sont visibles.

Indépendamment d'un découpage en pixel qui n'est pas nécessaire pour une définition graphique d'un codage 30, l'affectation des N couleurs aux sous-pixels apparait visuellement à l'analyse de l'image indicative de l'agencement 1. Ainsi la disposition des couleurs, y compris le brouillage colorimétrique, est obtenue à réception d'un codage 30 défini graphiquement, par analyse colorimétrique de la représentation graphique. Il peut être noté que le brouillage colorimétrique est ici défini de manière absolue et non pas relativement à une disposition régulière/périodique de référence des N couleurs.

De même pour chaque sous-pixel, la forme de sa zone de couleur 5 et la position de sa zone de couleur 5, peut être obtenue par analyse de l'image, pour peu que cette image soit de définition suffisamment fine. Ainsi la position et la forme des sous-pixels, y compris le ou les brouillages spatiaux, sont obtenues à réception d'un codage 30 défini graphiquement, par analyse spatiale de la représentation graphique. Il peut être noté que le ou les brouillages spatiaux sont ici, à l'instar du brouillage colorimétrique, définis de manière absolue et non pas relativement à une disposition spatiale régulière/périodique de référence des sous-pixels. Selon un autre mode de réalisation une telle représentation graphique peut être une image plus schématique de l'agencement 1, à l'instar des schémas des figures 1-9, tout en restant indicative de l'agencement 1. Une telle représentation graphique schématique peut ainsi être plus légère en termes de moyens de stockage. De même il peut être employé des codes de représentation graphique, tels que les codes utilisés pour définir les couleurs. Ceci peut être avantageux, si le récepteur dispose de moyens d'analyse limités, par exemple monochromes.

A la mesure du niveau de schématisation/simplification de la représentation graphique, son poids en stockage s'allège. Ceci peut être au détriment des possibilités de définition de certaines caractéristiques. Ainsi, par exemple, les schémas des figures 1-9 permettent difficilement de définir les formes et surtout les positions des zones de couleur des sous-pixels. Cependant, toute caractéristique qui ne peut être simplement définie graphiquement peut l'être de manière complémentaire au moyen d'éléments de définition numérique.

L'invention concerne encore un procédé de personnalisation d'un agencement 1, selon l'un des modes de réalisation précédemment décrits, pour réaliser une image. Un tel procédé comprend les étapes suivantes. Un opérateur autorisé reçoit une image qu'il souhaite réaliser sur un agencement 1. Une telle image est typiquement codée selon un standard graphique décomposant une image en pixels et définissant pour chaque pixel une position et une couleur.

Il reçoit encore le codage 30 associé au dit agencement 1. Le dit codage 30 comprend tous les éléments de définition d'un agencement 1, y compris le ou les brouillages réalisés et caractérisant l'agencement 1.

A partir de l'image à réaliser, l'opérateur autorisé sait réaliser une carte de réalisation d'image adaptée en fonction du moyen d'expression et de son mode de pilotage à un agencement régulier. Le principe est que chaque pixel de l'image est associé à au moins un pixel 3 de l'agencement 1 en fonction de sa position dans l'image. Ensuite la couleur du pixel de l'image est décomposée en fonction des N couleurs complémentaires des N sous-pixels 4 du pixel 3 de l'agencement 1. Il est ainsi obtenu une intensité d'expression pour chaque sous-pixel 4. Une carte de réalisation d'image peut alors être définie en fonctions des positions des dits sous-pixels 4.

Selon l'invention, puisque les positions et/ou formes des sous-pixels 4 ont pu être modifiées, tant par le brouillage colorimétrique, que par l'un des brouillages spatiaux, il convient de tenir compte du brouillage et d'adapter en conséquence la carte de réalisation d'image. Pour cela le codage 30 est mis à profit afin de connaitre le brouillage effectivement réalisé et ainsi déterminer avec exactitude la position effective de chaque sous-pixel 4.

Ensuite, muni de cette carte de réalisation d'image adaptée, il peut être procédé à une étape de réalisation d'image qui va réaliser/produire/révéler/exprimer l'image à partir de l'agencement 1. Cette étape est similaire en tous points à la même étape selon l'art antérieur, et n'en diffère que par la carte de réalisation d'image adaptée.

Afin de sécuriser encore davantage un dispositif de sécurité comprenant un tel agencement 1, la transmission d'un codage 30, entre le fabricant d'agencement 1 et le concessionnaire qui réalise une personnalisation, est avantageusement réalisée de manière cryptée. Ainsi le fabricant crypte le codage 30 avant de le transmettre au concessionnaire. Le dit concessionnaire dispose de la clef afin de pouvoir décrypter ledit codage 30 lors de sa réception afin de l'utiliser pour adapter la carte de réalisation d'image.

Un lot d'arrangement peut avantageusement partager un même brouillage. Dans ce cas, le codage 30 définissant ce brouillage n'a besoin d'être transmis du fabricant au concessionnaire qu'une seule fois, pour le dit lot.

## Revendications

1. Agencement de pixels destiné à être personnalisé pour réaliser une image, les pixels (3) formant un pavage d'une surface image (2), chaque pixel (3) comprenant une pluralité de N sous-pixels (4) contigus comprenant chacun une couleur différente choisie parmi N couleurs complémentaires, ***caractérisé en ce que*** l'agencement de pixels est brouillé spatialement relativement à un agencement spatialement périodique.

2. Agencement de pixels, selon la revendication **1,** où l'agencement de pixels est brouillé colorimétriquement relativement à un agencement colorimétriquement périodique.

3. Agencement de pixels, selon l'une quelconque des revendications **1** ou **2,** où la réalisation de l'image comprend une gravure laser.

4. Agencement de pixels, selon l'une quelconque des revendications **2** ou **3,** où un brouillage colorimétrique définit une affectation des N couleurs complémentaires aux N sous-pixels (4) d'un pixel, indépendamment pour chaque pixel (3).

5. Agencement de pixels, selon l'une quelconque des revendications **1** à **4,** où un sous-pixel (4) comprend une zone de couleur (5) et un fond contrastant (6), et où un brouillage spatial définit une forme (7) et/ou une position relative de la zone de couleur (5), indépendamment pour chaque sous-pixel (4).

6. Agencement de pixels, selon l'une quelconque des revendications **1** à **5,** où les sous-pixels (4) sont disposés selon un arrangement rectangulaire et/ou hexagonal.

7. Dispositif de sécurité comprenant un agencement (1) selon l'une quelconque des revendications **1** à **6.**

8. Document identitaire comprenant un agencement (1) selon l'une quelconque des revendications **1** à **6.**

9. Codage d'un agencement (1) de pixels destiné à être personnalisé par gravure au laser pour réaliser une image couleur, ***caractérisé en ce que*** l'agencement de pixels est brouillé spatialement et le codage comprend des éléments de définition numériques de l'agencement de pixels et de son brouillage comprenant des paramètres (10-22) et/ou des éléments de définition graphiques, ces éléments de définition permettant de reproduire ledit agencement (1) de pixels.

10. Codage selon la revendication **9,** où les paramètres (10-22) comprennent au moins un paramètre global, défini pour la totalité de l'agencement, comprenant au moins un paramètre de dimension (10) définissant les dimensions de l'agencement (1), au moins un paramètre de résolution (11) définissant les résolutions de l'agencement (1), au moins un paramètre de nombre de couleur (12) définissant le nombre N de couleurs complémentaires, au moins un paramètre de définition de couleur (13) définissant les N couleurs complémentaires.

11. Codage selon l'une quelconque des revendications **9** ou **10,** où les paramètres (10-22) comprennent encore un paramètre global d'arrangement (14) définissant l'arrangement des sous-pixels défini parmi rectangulaire ou hexagonal.

12. Codage selon l'une quelconque des revendications **9** à **11**, où les paramètres (10-22) comprennent encore un paramètre global de forme (15) définissant la forme d'un pixel (3), et où le paramètre global de forme (15) d'un pixel (3) comprend un deuxième attribut d'orientation (17) défini parmi direction 1, direction 2 ou direction 3 et un troisième attribut de décalage (18) défini parmi positif, nul ou négatif.

13. Codage selon l'une quelconque des revendications **9** à **12,** où les paramètres (10-22) comprennent encore au moins un paramètre pixel (20), individuellement défini pour chaque pixel (3), comprenant un paramètre d'affectation (20) définissant l'affectation des N couleurs complémentaires aux N sous-pixels (4) du pixel (3).

14. Codage selon l'une quelconque des revendications **9** à **13,** où les paramètres (10-22) comprennent encore au moins un paramètre sous-pixel (21-22), individuellement défini pour chaque sous-pixel, comprenant un paramètre de forme (21) définissant la forme d'une zone de couleur (5) du sous-pixel (4) et un paramètre de position (22) définissant la position d'une zone de couleur (5) du sous-pixel (4).

15. Procédé de personnalisation d'un agencement (1) selon l'une quelconque des revendications **1** à **6,** pour réaliser une image, **caractérisé en ce qu'**il comprend les étapes suivantes :
- réception d'une image à réaliser,
- réception d'un codage (30) associé au dit agencement (1),
- adaptation d'une carte de réalisation d'image en fonction du brouillage de l'agencement (1) tel que défini par le dit codage (30) associé reçu,
- réalisation de l'image selon la carte de réalisation d'image adaptée.

## Patentansprüche

1. Pixelanordnung, die dazu bestimmt ist, personalisiert zu werden, um ein Bild zu erstellen, wobei die Pixel (3) eine Pflasterung einer Bildfläche (2) bilden, wobei jedes Pixel (3) mehrere angrenzende N Subpixel (4) aufweist, die jeweils eine unterschiedliche Farbe aufweisen, die aus N komplementären Farben ausgewählt ist, **dadurch gekennzeichnet, dass** die Pixelanordnung relativ zu einer räumlich periodischen Anordnung räumlich verwürfelt ist.

2. Pixelanordnung gemäß Anspruch 1, wobei die Pixelanordnung relativ zu einer kolorimetrisch periodischen Anordnung kolorimetrisch verwürfelt ist.

3. Pixelanordnung gemäß einem der Ansprüche 1 oder 2, wobei das Erzeugen des Bildes ein Lasergravieren aufweist.

4. Pixelanordnung gemäß einem der Ansprüche 2 oder 3, wobei eine kolorimetrische Verwürfelung eine Zuordnung der N komplementären Farben zu den N Subpixeln (4) eines Pixels unabhängig für jedes Pixel (3) definiert.

5. Pixelanordnung gemäß einem der Ansprüche 1 bis 4, wobei ein Subpixel (4) einen Farbbereich (5) und einen kontrastierenden Hintergrund (6) aufweist und wobei eine räumliche Verwürfelung eine Form (7) und/oder eine relative Position des Farbbereichs (5) unabhängig für jedes Subpixel (4) definiert.

6. Pixelanordnung gemäß einem der Ansprüche 1 bis 5, wobei die Subpixel (4) in einer rechteckigen und/oder hexagonalen Anordnung angeordnet sind.

7. Sicherheitsvorrichtung, umfassend eine Anordnung (1) gemäß einem der Ansprüche 1 bis 6.

8. Identitätsdokument, umfassend eine Anordnung (1) gemäß einem der Ansprüche 1 bis 6.

9. Codierung einer Pixelanordnung (1), die dazu bestimmt ist, durch Lasergravieren personalisiert zu werden, um ein Farbbild zu erstellen, **dadurch gekennzeichnet, dass** die Pixelanordnung räumlich verwürfelt ist und die Kodierung digitale Definitionselemente von der Pixelanordnung und ihrer Verwürfelung aufweist, die Parameter (10-22) und/oder graphische Definitionselemente aufweisen, wobei diese Definitionselemente ermöglichen, die Pixelanordnung (1) wiederzugeben.

10. Codierung gemäß Anspruch 9, wobei die Parameter (10-22) mindestens einen globalen Parameter aufweisen, der für die Gesamtheit der Anordnung definiert ist, der mindestens einen Dimensionsparameter (10), der die Abmessungen der Anordnung (1) definiert, mindestens einen Auflösungsparameter (11), der die Auflösungen der Anordnung (1) definiert, mindestens einen Farbanzahlparameter (12), der die Anzahl N von komplementären Farben definiert, mindestens einen Farbdefinitionsparameter (13) aufweist, der die N komplementären Farben definiert.

11. Codierung gemäß einem der Ansprüche 9 oder 10, wobei die Parameter (10-22) auch einen globalen Anordnungsparameter (14) aufweisen, der die Anordnung der Unterpixel definiert, die aus rechteckig oder hexagonal definiert ist.

12. Codierung gemäß einem der Ansprüche 9 bis 11, wobei die Parameter (10-22) auch einen globalen Formparameter (15) aufweisen, der die Form eines Pixels (3) definiert, und wobei der globale Formparameter (15) eines Pixels (3) ein zweites Ausrichtungsattribut (17), das unter Richtung 1, Richtung 2 oder Richtung 3 definiert ist, und ein drittes Verschiebungsattribut (18) aufweist, das zwischen positiv, Null oder negativ definiert ist.

13. Codierung gemäß einem der Ansprüche 9 bis 12, wobei die Parameter (10-22) auch mindestens einen Pixelparameter (20) aufweisen, der einzeln für jedes Pixel (3) definiert ist, umfassend einen Zuordnungsparameter (20), der die Zuordnung der N komplementären Farben zu den N Subpixeln (4) eines Pixels (3) definiert.

14. Codierung gemäß einem der Ansprüche 9 bis 13, wobei die Parameter (10-22) auch mindestens einen Subpixelparameter (21-22) aufweisen, der einzeln für jedes Subpixel definiert ist, der einen Formparameter (21), der die Form eines Farbbereichs (5) des Subpixels (4) definiert, und einen Positionsparameter (22) aufweist, der die Position eines Farbbereichs (5) des Subpixels (4) definiert.

15. Verfahren zur Personalisierung einer Anordnung (1) gemäß einem der Ansprüche 1 bis 6, um ein Bild zu erstellen, **dadurch gekennzeichnet, dass** es die folgenden Schritte aufweist:
- Empfangen eines zu erstellenden Bildes,
- Empfangen einer Codierung (30), die der Anordnung (1) zugeordnet wird,
- Anpassen einer Karte der Bilderstellung in Abhängigkeit von der Verwürfelung der Anordnung (1), wie durch die empfangene zugeordnete Codierung (30) definiert,
- Erstellen des Bildes nach der angepassten Karte der Bilderstellung.

## Claims

1. A pixel layout that is to be personalized in order to make an image, the pixels (3) forming a tiling of an image surface (2), each pixel (3) having a plurality of N contiguous sub-pixels (4), each comprising a different color selected from N complementary colors, **characterized in that** the pixel layout is scrambled in space relative to a layout that is periodic in space.

2. A pixel layout, according to claim 1, wherein the pixel layout is scrambled in color relative to a layout that is periodic in color.

3. A pixel layout, according to any one of claim 1 or 2, wherein the image is made by laser etching.

4. A pixel layout, according to any one of claim 2 or claim 3, wherein scrambling in color defines an allocation of N complementary colors to the N sub-pixels (4) of a pixel, in independent manner for each pixel (3).

5. A pixel layout, according to any one of claims 1 to 4, wherein a sub-pixel (4) comprises a color zone (5) and a contrasting background (6), and wherein scrambling in space defines a shape (7) and/or a relative position (8) for the color zone (5), in independent manner for each sub-pixel (4).

6. A pixel layout, according to any one of claims 1 to 5, wherein the sub-pixels (4) are disposed in a rectangular and/or hexagonal arrangement.

7. A security device comprising a layout (1) according to any one of claims 1 to 6.

8. An identity document including a layout (1) according to any one of claims 1 to 6.

9. A coding for a pixel layout (1) that is to be personalized by laser etching in order to make a color image, **characterized in that** the pixel layout is scrambled in space and the coding comprises digital definition elements of the pixel layout and of its scrambling having parameters (10-22) and/or graphics definition elements, these definition elements enabling said pixel layout (1) to be reproduced.

10. A coding according to claim 9, wherein the parameters (10-22) comprise at least one global parameter, defined for the entire layout, having at least one dimension parameter (10) defining the dimensions of the layout (1), at least one resolution parameter (11) defining the resolutions of the layout (1), at least one color number parameter (12) defining the number N of complementary colors, and at least one color definition parameter (13) defining the N complementary colors.

11. A coding according to any one of claim 9 or 10, wherein the parameters (10-22) further comprise a global arrangement parameter (14) defining the arrangement of the sub-pixels selected from rectangular and hexagonal.

12. A coding according to any one of claims 9 to 11, wherein the parameters (10-22) further comprise a global shape parameter (15) defining the shape of a pixel (3), and wherein the global shape parameter (15) of a pixel (3) comprises a second orientation attribute (17) selected from a direction 1, a direction 2, and a direction 3, and a third offset attribute (18) selected from positive, zero, and negative.

13. A coding according to any one of claims 9 to 12, wherein the parameters (10-22) further comprise at least one pixel parameter (20), individually defined for each pixel (3), comprising an allocation parameter (20) defining the allocation of the N complementary colors to the N sub-pixels (4) of the pixel (3).

14. A coding according to any one of claims 9 to 13, wherein the parameters (10-22) further comprise at least one sub-pixel parameter (21-22), individually defined for each sub-pixel, comprising a shape parameter (21) defining the shape of a color zone (5) of the sub-pixel (4) and a position parameter (22) defining the position of a color zone (5) of the sub-pixel (4).

15. A method of personalizing a layout (1) according to any one of claims 1 to 6, for making an image, **characterized in that** it comprises the following steps:
• receiving an image to be made;
• receiving a coding (30) associated with said layout (1);
• adapting an image-making map as a function of the scrambling of the layout (1) as defined by said received associated coding (30); and
• making the image in accordance with the adapted image-making map.
